# EUROPÄISCHE PATENTSCHRIFT

(11) **EP 1 593 233 B1**
(45) Veröffentlichungstag und Bekanntmachung des Hinweises auf die Patenterteilung: **07.03.2007**
(21) Anmeldenummer: 04703765.0
(22) Anmeldetag: 21.01.2004
(51) Int. Cl.: H04L 12/28, B60C 23/04

(54) **VERFAHREN ZUR SYNCHRONISATION DER DATENÜBERTRAGUNG MIT WENIGSTENS EINEM ERSTEN FUNKSYSTEM UND WENIGSTENS EINEM WEITEREN FUNKSYSTEM**
METHOD FOR SYNCHRONISING DATA TRANSMISSION COMPRISING AT LEAST ONE FIRST RADIO SYSTEM AND AT LEAST ONE ADDITIONAL RADIO SYSTEM
PROCEDE DE SYNCHRONISATION DE LA TRANSMISSION DE DONNEES AVEC AU MOINS UN PREMIER SYSTEME RADIO ET AU MOINS UN AUTRE SYSTEME RADIO

(30) Priorität: 10.02.2003 DE 10305373
(43) Veröffentlichungstag der Anmeldung: 09.11.2005
(73) Patentinhaber: SIEMENS AKTIENGESELLSCHAFT, 80333 München (DE)
(72) Erfinder: BERNDT, Holger, 92224 Amberg (DE); BIENERT, Matthias, 93051 Regensburg (DE)
(86) Internationale Anmeldenummer: PCT/EP2004/000469
(87) Internationale Veröffentlichungsnummer: WO 2004/071017

(56) Entgegenhaltungen:
- EP-A- 0 424 878
- WO-A-00/22693
- WO-A-01/58197
- US-A1- 2002 087 250
- US-A1- 2002 113 692

## Beschreibung

Die Erfindung betrifft ein Verfahren und eine Anordnung zur Synchronisation der Datenübertragung mit wenigstens einem ersten Funksystem und wenigstens einem weiteren Funksystem, wie sie beispielsweise in der Fahrzeugtechnik Anwendung finden.

Aus der WO 01/058197 A1 ist ein Verfahren zur Intersystem-Verbindungsweiterschaltung bekannt. Das vorgeschlagene Verfahren ist für die Kommunikation zwischen verschiedenen Mobilfunksystemen vorgesehen, die mit jeweils unterschiedlichen physikalischen Voreinstellungen, z.B. unterschiedlichen Frequenzbändern, betrieben werden. Die Basis bildet ein verbessertes Verfahren zur Nutzung des sogenannten Compressed Mode, bei dem eine Empfangseinrichtung Signale verschiedener Frequenzbänder empfangen kann, diese anschließend an weitere Mobilfunknetze angepasst werden und schließlich komprimiert werden. Diese Komprimierung schafft im zeitlichen Ablauf eine Übertragungslücke, in der ein weiteres Frequenzband abgestimmt werden kann.

Aus der EP 0 424 878 A2 ist ein Zeitmultiplex-Kommunikationssystem für Kraftfahrzeuge bekannt. Ein "Master" (Hauptstation) sendet Informationen in einer vorgegebenen Reihenfolge (Ruffolge) an eine Vielzahl an "Slaves" (Unterstationen). Für den Vorgang ist eine bestimmte Zeitdauer vorbestimmt. Mittels einer Änderungseinrichtung kann die Ruffolge geändert werden.

In einem modernen Fahrzeug befinden sich u.a. Funksysteme, um beispielsweise den Reifendruck zu überwachen und die Zugangsberechtigung (Authentifizierung, Steuern der Zentralverriegelung, Steuern der Wegfahrsperre, Motorstart etc.) zu kontrollieren.

Ein Teil dieser Funksysteme arbeitet mit zustandsabhängigen Senderaten und Pausen, um bei ausreichender Funktionalität einen möglichst geringen Energieverbrauch zu ermöglichen und ein zu schnelles Entladen der Energieversorgung (Batterie oder Akku) zu vermeiden.

Bei derartigen asynchronen Funksystemen können jedoch Übertragungsfehler, beispielsweise aufgrund von Kollisionen mit Signalübertragungen eines anderen Funkssystems, entstehen. Zudem ist es bei einer asynchronen Übertragung notwendig, lange zu senden oder lange zu empfangen, um eine Übertragung zu gewährleisten. Insbesondere durch ein längeres Senden einer Sendeeinrichtung entsteht nachteiligerweise ein hoher Energieverbrauch, der zu einer unerwünschten schnelleren Entladung der Batterie beiträgt.

Der vorliegenden Erfindung liegt daher die Aufgabe zugrunde, ein Verfahren zur Synchronisation der Datenübertragung und eine Anordnung hierfür zu schaffen, die ein optimiertes Zusammenwirken mehrerer Funksysteme ermöglicht und den Energieverbrauch senkt, wobei mindestens eines der Funksysteme asynchron arbeitet.

Diese Aufgabe wird erfindungsgemäß durch ein Verfahren mit den Merkmalen des Anspruchs 1 sowie eine Anordnung mit den Merkmalen des Anspruchs 4 gelöst.

Durch das Auswerten des Übertragungsverhaltens wenigstens eines ersten Funksystems und Vorausberechnen wenigstens eines nachfolgenden Zeitfensters kann das weitere Funksystem, das auf derselben Übertragungsfrequenz wie das erste Funksystem arbeitet, entsprechend angesteuert werden. Die Auswertung und Bestimmung eines nachfolgenden Zeitfensters für die Übertragung des weiteren Funksystems kann hierbei auch bei Funksystemen mit großen Toleranzen oder gar sogenannten asynchronen Funksystemen mit zustandsabhängigen Übertragungsraten auf einfache Weise vorgenommen werden, da hier nur das Bestimmen einer größeren Anzahl von aufeinanderfolgenden Zeitfenstern problematisch ist und das wirkliche Eintreffen der weiteren zukünftigen Zeitfenster immer unwahrscheinlicher wird.

So kann beispielsweise das Sendeverhalten eines Funksystems oder gar mehrerer Sendeeinrichtungen eines Funksystems zu einem bestimmten Zeitpunkt x hinsichtlich eines nächsten (direkt) nachfolgenden Zeitfensters auf einfache Weise ausgewertet werden, indem jeder Sendeeinrichtung jeweils ein Zähler zugeordnet ist. Soll als Zeitfenster ein Fenster bestimmt werden, in dem keinerlei Sendeaktivität erfolgt, messen die Zähler hierzu die Zeit zwischen zwei aufeinanderfolgenden Sendeblöcken.

Nach dem Ende des aufeinanderfolgenden Sendeblocks kann der so ermittelte Zählerstand durch Rückwärtszählen, beispielsweise durch Kopieren des Zählerstandes in ein weiteres Register, als Angabe verwendet werden, wann mit dem Beginn eines nächsten Sendeblocks zu rechnen ist bzw. wie lange die Sendepause andauern wird.

Sind mehrere Sendeeinrichtungen am Senden, kann mittels Feststellen, ab welchem Zeitpunkt keine Sendeaktivität mehr erfolgt (Beginn des Zeitfensters), durch Ablesen des Zählers mit dem kleinsten Zählerstand die Dauer dieses Zeitfensters bestimmt werden.

Ein auf diese Weise ermitteltes Zeitfenster kann selbstverständlich als Grundlage für weitere nachfolgende Zeitfenster verwendet werden, indem man die weiteren Zeitfenster aufgrund eines vorausberechenbaren (beispielsweise periodischen) Verhaltens bestimmt bzw. sich das auf die vorstehend ausgeführte Art ermittelte Zeitfenster wiederholt.

Es ist aber auch denkbar, dass die vorstehend ausgeführte Art zu Ermittlung eines Zeitfensters für jedes benötigte Zeitfenster auf Anfrage oder permanent wiederholt wird.

Hierdurch können vorteilhafterweise Kollisionen zweier oder mehrerer auf einer Übertragungsfrequenz arbeitender, von einander unabhängiger Funksysteme verhindert werden. Aufgrund unnötiger kollisionsbedingter Übertragungswiederholungen kann hierdurch die Übertragung optimiert und der Energieverbrauch verringert werden.

In einer anderen Ausführungsform kann das Empfangsverhalten einer beispielsweise asynchron arbeitenden Empfangseinrichtung ausgewertet und zu einem optimierten Senden eines als Sendeeinrichtung ausgebildeten weiteren Funksystems verwendet werden. Hierzu wird, beispielsweise wie vorstehend beschrieben, ein Zeitfenster bestimmt, in dem keinerlei Empfangsaktivität vorhanden ist. Entsprechend kann die ansteuerbare Sendeeinrichtung so angesteuert werden, dass in diesem Zeitfenster kein Senden erfolgt, um einen unnötigen Energieverbrauch zu vermeiden. Hierdurch kann vorteilhafterweise die Übertragung zweier oder mehrerer auf einer Übertragungsfrequenz zusammen arbeitender (uni- oder bidirektionaler) Funksysteme optimiert und der Energieverbrauch verringert werden.

Selbstverständlich ist es auch denkbar, statt der Zeitfenster mit keinerlei Sende- oder Empfangsaktivität, wie in beiden Ausführungsformen vorstehend beschrieben, Zeitfenster mit Sende- oder Empfangsaktivität zu bestimmen und für die Ansteuerung eines weiteren unabhängigen oder eines mit dem ersten zusammenarbeitenden Funksystems zu verwenden.

In bevorzugter Ausgestaltung der Erfindung überträgt das wenigstens eine erste Funksystem Daten zustandsabhängig mit unterschiedlichen Senderaten (asynchron). Das Sendeverhalten des wenigstens ersten Funksystems kann hierbei zumindest innerhalb eines Zustandes mit festen Senderaten ausgewertet und zu einer sicheren Vorhersage für ein Zeitfenster verwendet werden. Nur bei einem Übergang in einen anderen Zustand ist das zu diesem Zeitpunkt mit anderen Vorgaben vorherbestimmte Fenster unrichtig.

Oftmals sind aber Kollisionen von wenigstens zwei unabhängigen Funksystem, wie beispielsweise in der Anwendung Reifendrucküberwachungssystem und Zugangskontrollsystem nur innerhalb eines Zustands z. B. "Fahrzeugstillstand", möglich, so dass derartig fehlerhaft Bestimmungen nicht auftreten. In anderen Fällen ist durch eine solche geringe Fehlerrate aufgrund einer üblichen Redundanz (Übertragungswiederholung bei Fehler) trotzdem eine wesentliche Optimierung der Übertragungen und damit Reduzierung des Energieverbrauchs bei ausreichender Funktionalität möglich.

In weiterer Ausgestaltung der Erfindung werden die vorgenannten Zeitfenster mittels einer Auswerteeinrichtung in Form von jeweils einer Sendeeinrichtung eines ersten Funksystems zugeordneten Zählern ermittelt. Dieser bzw. diese Zähler können vorteilhafterweise platzsparend in ein zentrales Steuergerät integriert sein. Selbstverständlich ist es aber auch denkbar, die Zähler lokal verteilt als eigenständige bauliche Einheiten oder in einer eigenständigen Auswerteeinheit anzuordnen, um vorteilhafterweise eine einfachere Zugangsmöglichkeit, beispielsweise für Wartungs- oder Reparaturzwecke, zu gewährleisten.

In bevorzugter Ausgestaltung der Erfindung wird das erfindungsgemäße Synchronisationsprinzip vorwiegend dazu verwendet, Sendezeiten zu optimieren, da die Sendeaktivität besonders energieaufwändig ist. Selbstverständlich kann aber auch durch eine Optimierung der Empfangsaktivität eine Verringerung des Energieverbrauchs erreicht werden.

Die Erfindung wird nachfolgend anhand eines in der Zeichnung dargestellten Ausführungsbeispiels näher erläutert. In der Zeichnung zeigt:

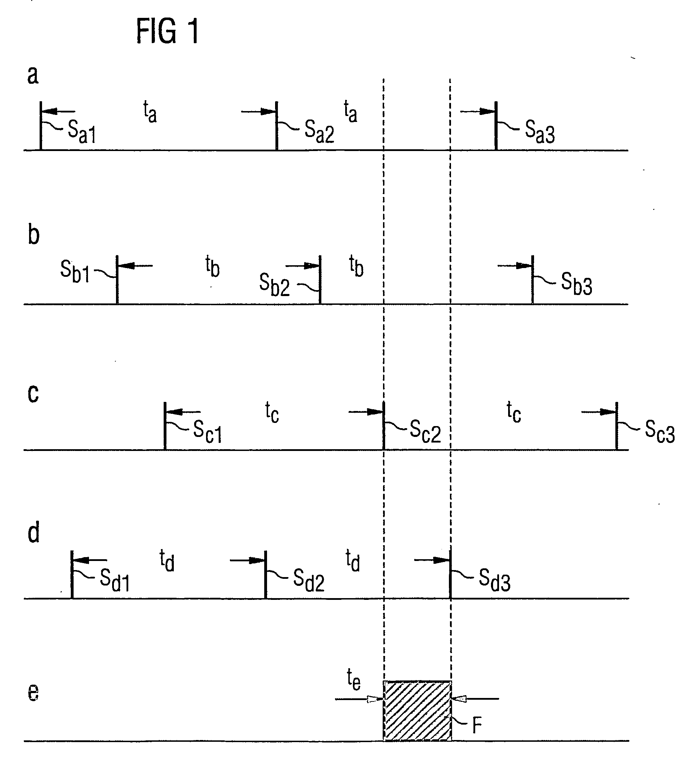

- Fig. 1: Ein Zeitdiagramm des Sendeverhaltens mehrerer Sendeeinrichtungen eines ersten Funksystems.

Das in Fig. 1 dargestellte Zeitdiagramm zeigt ein typisches Sendeverhalten mehrerer Sendeeinrichtungen eines asynchronen Funksystems, beispielsweise die Emissionen von Radsensoren bzw. Radelektronikeinheiten eines Reifendruckkontrollsystems eines Kraftfahrzeugs.

Hierbei sendet jeweils eine einem Rad zugeordnete Radelektronik den mittels eines Sensors erfassten Luftdruckwert in Form eines Sendetelegramms an eine Empfangseinrichtung, üblicherweise ein zentrales Steuergerät, welche beispielsweise für den Empfang aller Radelektroniken zuständig ist.

Um den Energieverbrauch gering zu halten und die Autobatterie nicht unnötig zu belasten, bestehen zwischen den kurzen Sendeblöcken Sₐ₁-Sₐ₂, Sₐ₂-Sₐ₃, S_{b1}-S_{b2}, S_{b2}-S_{b3}, S_{c1}-S_{c2}, S_{c2}-S_{c3}, S_{d1}-S_{d2}, S_{d2}-S_{d3} (im Diagramm nur als senkrechte Striche mit geringer Breite dargestellt) Pausen mit vergleichsweise langer Zeitdauer tₐ bzw. t_{b}, t_{c}, t_{d}. Diese Sendetelegramme der beispielsweise vier Radelektroniken a, b, c, d werden beispielsweise im RF-Bereich, insbesondere bei 433, 868, oder 315 MHz gesendet. Selbstverständlich ist jedoch auch eine Übertragung mit anderen Frequenzen oder gar in einem anderen Bereich, beispielsweise im Mikrowellenbereich möglich.

Obwohl die einzelnen Radelektroniken zueinander üblicherweise baugleich sind, stellt sich der für einen sicheren Empfang bei gleicher Übertragungsfrequenz notwendige Zeitversatz der einzelnen Sendeblöcke Sₐ₁ bis S_{d3} zueinander auch ohne Synchronisation untereinander oder vorgegebene unterschiedliche Pausendauern (tₐ <> t_{b} <> t_{c} <> t_{d}) bereits durch die jeweils vorhandene Toleranz von beispielsweise bis zu ± 20 % ein. Entsprechend ist eine Überschneidung zweier oder mehrerer Sendeblöcke und damit eine Kollision äußerst unwahrscheinlich.

Ordnet man nun beispielsweise im zentralen Steuergerät jedem Sendetelegramm einer Radelektronik a, b, c, d jeweils einen Zähler zu, welcher zu einem Zeitpunkt x nach dem Ende eines ersten Sendeblocks Sₐ₁, S_{b1}, S_{c1}, S_{d1} startet und mit Beginn eines neuen nachfolgenden Sendeblocks Sₐ₂, S_{b2}, S_{c2}, S_{d2} stoppt, so steht der Zählerstand eines solchen Zählers für die Pausendauer tₐ, t_{b}, t_{c}, t_{d} zwischen zwei Sendeblöcken Sₐ₁-Sₐ₂, S_{B1}-S_{b2}, S_{c1}-S_{c2}, S_{d1}-S_{d2}.

Lässt man einen solchen Zählerstand, beispielsweise durch Kopieren in ein weiteres Register, nach dem Ende des nächsten Sendeblocks Sₐ₂, S_{b2}, S_{c2}, S_{d2} abwärts zählen, so zeigt ein solcher abwärts laufender Zähler zu jedem Zeitpunkt auf der Zeitachse des Zeitdiagramms (waagrechte Achsen) die jeweils noch verbleibende Zeit, bevor ein neuer Sendeblock Sₐ₃, S_{b3}, S_{c3}, S_{d3} zu erwarten ist.

Um ein Zeitfenster F zu bestimmen, in welchem keinerlei Sendeaktivität der Radelektroniken a bis d zu erwarten ist, muss nur abgewartet werden, bis alle Zähler abwärts zählen bzw. nach einem Zeitpunkt x, im Beispiel "Ende des ersten Sendeblocks", bei allen Radelektroniken das Ereignis "Ende des zweiten Sendeblocks Sₐ₂, S_{b2}, S_{c2}, S_{d2}" eingetreten ist.

Wie im Beispiel ersichtlich, sendet die Radelektronik c als letzte, so dass nach dem Ende des zweiten Sendeblocks S_{c2} der Radelektronik c sich die Radelektroniken a, b, d bereits im Pausenzustand befinden und deren Zähler bereits im fortgeschrittenen Maße abwärts zählen. Am Ende des zweiten Sendeblocks S_{c2} der Radelektronik c kann daher durch Ablesen des kleinsten Zählerstandes der übrigen Zähler festgestellt werden, wann wieder mit einem Sendeblock einer beliebigen Radelektronik a, b, c, d zu rechnen ist.

Im dargestellten Beispiel ist der Zähler der Radelektronik d am weitesten fortgeschritten bzw. liegt das Ende des zweiten Sendeblocks am längsten zurück, so dass der Beginn eines weiteren (dritten) Sendeblocks S_{d3} der Radelektronik d das Ende des Zeitfensters F bestimmt, welches somit bereits eine zu Beginn des Zeitfensters vorhersehbare Zeitdauer tₑ aufweist.

Ein auf diese Weise vorhersehbares bzw. vorhersagbares Zeitfenster mit bestimmter Zeitdauer tₑ, in der keinerlei Sendeaktivität der Radelektroniken a bis d zu erwarten ist, kann nun beispielsweise dazu verwendet werden, ein weiteres Funksystem bzw. dessen Sendeeinrichtung so anzusteuern, dass Kollisionen mit den Sendungen der Radelektroniken a bis d ausgeschlossen werden können.

Beispielsweise kann in einem Fahrzeug das Zugangsüberwachungssystem (schlüssellos), welches mit derselben Frequenz arbeitet wie das Reifendruckkontrollsystem, dazu veranlasst werden, dass es nur in einem solchen Zeitfenster F überträgt bzw. die Sendeeinrichtung sendet, so dass ein Sendeblock dieses Systems mit den Sendeblöcken Sₐ₁ bis S_{d3} der Radelektroniken a bis d nicht kollidieren kann.

Zusätzlich ergeben sich durch das Erfassen und Bestimmen eines solchen Zeitfensters weitere Möglichkeiten, wie beispielsweise Optimieren der Empfangszeit einer Empfangseinrichtung, beispielsweise durch Abschalten der Empfangseinrichtung für ein Zeitfenster F, in dem ja keine Sendungen zu erwarten sind.

Andererseits ist es auch denkbar, statt der Zeit zwischen Sendeblöcken die Zeit zwischen den Empfangsblöcken zu erfassen und in analoger Weise, wie vorstehend für die Sendeblöcke dargestellt, ein Zeitfenster zu bestimmen, in dem keine Empfangsblöcke zu erwarten sind bzw. in dem die einzelnen Empfänger nicht empfangsbereit sind. Entsprechend ist es nicht nötig, zu diesen Zeiten zu senden, so dass die Sendeeinrichtung entsprechend abgeschaltet werden kann, wodurch die Übertragung optimiert und der Energieverbrauch gesenkt werden kann.

Es ist aber auch denkbar, ein Zeitfenster mit dem Beginn des ersten Empfangsblocks einer von beispielsweise mehreren Empfangseinrichtungen zu bestimmen, welches sich in der Dauer bis zum Ende des letzten Empfangsblocks einer beliebigen Empfangseinrichtung erstreckt, so dass ein solches Zeitfenster angibt, wie lange gesendet werden muss, damit alle Empfangseinrichtungen sicher empfangen haben.

Als Beispiel für eine Synchronisation auf eine empfangsbereite Zeit bzw. Empfangsblöcke kommt beispielsweise eine Radelektronik in Frage, die nicht nur sendet, sondern auf einer anderen Frequenz, beispielsweise im Kilohertzbereich, insbesondere bei 120 kHz, ein Triggersignal eines Triggersenders empfangen kann.

Das energieaufwändige Senden eines solchen Triggersenders kann erfindungsgemäß durch Auswerten der Empfangszeit bzw. der Empfangsblöcke und der jeweiligen Pausendauern optimiert werden, so dass sich die Sendezeiten des Triggersenders verringern und der Energieverbrauch und damit die Belastung der Energiequelle, insbesondere Autobatterie, senken lässt.

Selbstverständlich sind das erfindungsgemäße Verfahren und die erfindungsgemäße Anordnung nicht auf das dargestellte Ausführungsbeispiel beschränkt, sondern in vielen Einsatzgebieten verwendbar.

So ist es denkbar, allgemein möglicherweise kollidierende Funksysteme in der erfindungsgemäßen Art und Weise zu synchronisieren, um Kollisionen zu vermeiden und Energie zu sparen, ohne eine weitere Übertragungsfrequenz zu beanspruchen.

Es versteht sich für einen Fachmann von selbst, dass die Vorausberechnung eines Zeitfensters (über alle Ausführungsformen) zu einem beliebigen Zeitpunkt auf Anforderung oder vorgegeben erfolgen kann. Weitere Zeitfenster können auf der Grundlage eines einfach berechenbaren Verhaltens (z.B. periodisch) zumindest innerhalb eines (gleichbleibende Bedingungen) Zustandes des ersten ermittelten Zeitfensters vorausberechnet werden.

Es ist aber auch denkbar, für weitere Zeitfenster jeweils eine Neubestimmung (wie vorstehend ausgeführt) vorzunehmen, wobei eine solche Neubestimmung bzw. Ermittlung auf Anfrage, stichpunktartig oder permanent in gewissen Abständen oder unmittelbar aufeinander folgend (Zählen eines jeden Abstandes von Sendeblöcken und Rückwärtszählen - auch bei gleichzeitigem Zählen) vorgenommen werden kann.

So kann eine Wiederholung der Ermittlung eines Zeitfensters sich direkt an das dargestellte Beispiel anschließen, indem beispielsweise nach jedem Ende eines Sendeblocks Sₐ₁ bis S_{d3} jeweils ein Zähler den Abstand zum nächsten Sendeblock (Anfang) misst, der Zählerstand in ein anderes Register kopiert wird, welches nach dem Ende dieses Sendeblock rückwärts zählt. Die Zähler können während des Rückwärtszählens mit einem anderen Register bereits wieder mit dem Ende dieses Sendeblocks aufwärtszählen (eventuell nach einem Rücksetzen), um den nächsten Abstand zu ermitteln, welcher beim nächsten Sendeblock wiederum als Zählerstand in das Register zum Abwärtszählen kopiert werden kann.

## Patentansprüche

1. Verfahren zur Synchronisation der Datenübertragung mit wenigstens einem ersten Funksystem und wenigstens einem weiteren Funksystem in einem Kraftfahrzeug, wobei das wenigstens eine erste Funksystem als Reifendrucküberwachsungseinrichtung und das wenigstens eine weitere Funksystem als Zugangskontrollsystem ausgebildet ist
**dadurch gekennzeichnet, dass**
a) das Übertragungsverhalten des wenigstens ersten Funksystems zu einem Zeitpunkt x ausgewertet wird und wenigstens ein nach diesem Zeitpunkt x folgendes Zeitfenster zwischen den Datenblöcken vorausberechnet wird, während dessen keine Übertragung des wenigstens einen ersten Funksystems erfolgt oder eine Übertragung erwartet wird, und
b) das wenigstens eine weitere Funksysteme derart angesteuert wird, um Daten innerhalb eines solchen Zeitfensters zu übertragen.
c) das wenigstens eine erste Funksystem und wenigstens eine weitere Funksystem mit derselben Übertragungsfrequenz voneinander unabhängig arbeiten; und
d) dass das wenigstens eine erste Funksystem mittels mehrerer Sendeeinrichtungen auf der gleichen Übertragungsfrequenz asynchron sendet oder empfängt, so dass Zeitfenster entstehen, in denen nicht gesendet oder eine Übertragung erwartet wird.

2. Verfahren nach Anspruch 1, **dadurch gekennzeichnet, dass** das wenigstens eine erste Funksystem Daten zustandsabhängig mit unterschiedlichen Senderaten überträgt und das Sendeverhalten des wenigstens ersten Funksystems innerhalb eines Zustandes des wenigstens ersten Funksystems mit festen Senderaten ausgewertet wird.

3. Verfahren nach einem der vorhergehenden Ansprüche, **dadurch gekennzeichnet, dass** die Zeitdauer zwischen zwei Sendeblöcken mittels eines jeweils einer Sendeeinrichtung zugeordneten Zählers als Zählerstand erfasst wird und der Zählerstand am Ende eines Sendeblocks abwärts gezählt wird.

4. Anordnung zur Durchführung eines Verfahrens nach einem der vorherigen Ansprüche,
**dadurch gekennzeichnet, dass**
wenigstens ein erstes und wenigstens ein weiteres Funksystem vorgesehen sind, die beide mit derselben Übertragungsfrequenz voneinander unabhängig arbeiten,
und denen eine Auswertungsschaltung zugeordnet ist, mittels der wenigstens ein Zeitfenster vorausberechenbar ist, in welchem das wenigstens eine erste Funksystem nicht überträgt oder eine Übertragung erwartet und dass das wenigstens eine weitere Funksystem eine ansteuerbare Sendeeinrichtung aufweist, um während eines solchen Zeitfensters zu senden.

5. Anordnung nach Anspruch 4, **dadurch gekennzeichnet, dass** das wenigstens eine erste Funkssystem mehrere Sendeeinrichtungen umfasst, die asynchron arbeiten.

6. Anordnung nach Anspruch 4 oder 5, **dadurch gekennzeichnet, dass** die Auswerteeinrichtung für jede der Sendeeinrichtungen des wenigstens einen ersten Funksystems jeweils einen (Zeit-)Zähler umfasst, welcher rückwärts zählt.

7. Anordnung nach einem der Ansprüche 4 bis 6, **dadurch gekennzeichnet, dass** die Auswerteeinrichtung in ein zentrales Steuergerät integriert ist.

## Claims

1. Method for synchronisation of data transmission comprising at least one first radio system and at least one additional radio system in a motor vehicle, with the at least one first radio system being embodied as a tyre pressure monitoring device and the at least one further radio system being embodied as an access control system
**characterised in that**
a) the transmission behaviour of the at least first radio system is evaluated at a point in time x and at least one time interval between the data blocks following this point in time x is calculated in advance, during which no transmission of the at least one first radio system is undertaken or a transmission is expected, and
b) the at least one additional radio system is activated in order to transmit data within such a time interval.
c) the at least one first radio system and at least one further radio system operate independently of each other with the same transmission frequency, and
d) the at least one first radio system sends or receives asynchronously by means of a number of send devices on the same transmission frequency, so that time intervals arise in which no sending or receiving is expected.

2. Method in accordance with claim 1, **characterised in that** the at least one first radio system transmits data dependent on the states at different send rates and the send behaviour of the at least first radio system is evaluated within one state of the at least first radio system with fixed send rates.

3. Method in accordance with one of the preceding claims, **characterised in that** the length of time between two send blocks is recorded as a counter status by means of a counter assigned to send device in each case and the counter status is counted down at the end of the send block.

4. Arrangement for implementing a method according to one of the preceding claims,
**characterised in that**
at least one first and at least one additional radio system are provided, which operate independently of each other with the same transmission frequency
and to which an evaluation unit is assigned, by means of which at least one time interval can be calculated in advance, in which the at least one first radio system does not transmit or expect a transmission and that the at least one additional radio system features an activatable send device to transmit during such a time interval.

5. Arrangement according to claim 4, **characterised in that** the at least one first radio system comprises a number of send devices which operate asynchronously

6. Arrangement in accordance with claim 4 or 5, **characterised in that** the evaluation unit, for each of the send devices of the at least one first radio system, includes a counter in each case which counts down.

7. Arrangement in accordance with one of the claims 4 to 6, **characterised in that** the evaluation unit is integrated into a central control unit.

## Revendications

1. Procédé de synchronisation de la transmission de données utilisant au moins un premier système radio et au moins au autre système radio dans un véhicule automobile, l'au moins un premier système radio étant constitué par un dispositif de surveillance de la pression des pneumatiques et l'au moins un autre système radio étant constitué par un système de contrôle de l'accès,
**caractérisé en ce que**
a) la caractéristique de transmission de l'au moins un premier système radio est analysée à un instant x et au moins une fenêtre de temps entre blocs de données qui fait suite à cet instant x est calculée à l'avance, fenêtre dans laquelle il ne se produit pas de transmission de l'au moins un premier système radio, ou bien dans laquelle on s'attend à une transmission, et
b) l'au moins un autre système radio est commandé de manière à transmettre des données dans cette fenêtre de temps,
c) l'au moins un premier système radio et au moins un autre système radio travaillent indépendamment l'un de l'autre avec la même fréquence de transmission ; et
d) l'au moins un premier système radio émet ou reçoit en asynchrone sur la même fréquence de transmission, au moyen de plusieurs dispositifs d'émission, de sorte qu'il se forme des fenêtres de temps dans lesquelles on n'émet pas ou on n'attend pas de transmission.

2. Procédé selon la revendication 1 **caractérisé en ce que** l'au moins un premier système radio transmet des données à différentes cadences d'émission en fonction de l'état et la caractéristique de l'au moins un premier système radio est analysée dans un état de l'au moins un premier système radio qui comporte des cadences d'émission fixes.

3. Procédé selon une des revendications précédentes, **caractérisé en ce que** la période entre deux blocs d'émission est captée au moyen d'un compteur associé à chaque dispositif d'émission sous la forme d'un état de compteur et l'état de compteur est compté en décroissant à la fin d'un bloc d'émission.

4. Dispositif pour la mise en oeuvre d'un procédé selon une des revendications précédentes,
**caractérisé en ce qu'**
il est prévu au moins un premier et au moins un autre système d'émission qui travaillent tous deux à la même fréquence de transmission et indépendamment l'un de l'autre,
et auxquels est associé un circuit d'analyse au moyen duquel peut être calculée à l'avance une fenêtre de temps dans laquelle l'au moins un premier système radio ne transmet pas ou attend une transmission, et **en ce que** l'au moins un autre système radio comprend un dispositif d'émission pouvant être commandé, destiné à émettre dans une telle fenêtre de temps.

5. Dispositif selon la revendication 4, **caractérisé en ce que** l'au moins un premier système radio comprend plusieurs unités d'émission qui travaillent en asynchrone.

6. Dispositif selon la revendication 4 ou 5, **caractérisé en ce que** le dispositif d'analyse comprend pour chacun des dispositifs d'émission de l'au moins un premier système radio, un compteur (de temps) qui compte en décroissant.

7. Dispositif selon une des revendications 4 à 6, **caractérisé en ce que** le dispositif d'analyse est intégré dans un appareil de commande central.
